(19) **Europäisches Patentamt / European Patent Office / Office européen des brevets**

(11) **EP 3 170 726 A1**

(12) **EUROPEAN PATENT APPLICATION**

(43) Date of publication:
24.05.2017 Bulletin 2017/21

(51) Int Cl.:
*B62K 5/10* $^{(2013.01)}$    *B62D 9/02* $^{(2006.01)}$

(21) Application number: 16020451.7

(22) Date of filing: 17.11.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 18.11.2015 IT UB20155710

(71) Applicant: **Electric Fox S.r.l.**
**36057 Arcugnano (VI) (IT)**

(72) Inventor: **Rais, Alexis Iraj**
**36057 Arcugnano (VI) (IT)**

(74) Representative: **Rastelli, Franco**
**Dott. Franco Cicogna & C. SRL**
**Via Visconti di Modrone, 14/A**
**20122 Milano (IT)**

(54) **TILTING VEHICLE**

(57)    A laterally tiltable vehicle structure (1) comprising at least two front wheels (5, 51) each of which is associated to a respective swing arm (6, 61) which is pivoted to a frame member (2) so as to be able to pivot and change the height of the respective wheel (5, 51) wherein the swing arms (6, 61) are interconnected by a drive system so that when a swing arm is lifted the opposite one is lowered and vice versa.

**FIG. 1**

**Description**

**BACKGROUND OF THE INVENTION**

The present invention relates to a laterally tiltable vehicle structure with three or more wheels.

Vehicles with three or four wheels, which are laterally tiltable, are known.

Such tilting vehicles offer the possibility of having a narrow vehicle, which is agile in the traffic, has a reduced aerodynamic resistance and must not necessarily have a low centre of gravity.

In the known laterally tiltable vehicles, the angle of the tilt is substantially controlled in three ways.

A first control system is carried out solely via the steering wheel, as in a bicycle, for which the stability of the vehicle is critical, as an inverted pendulum.

Some vehicles with three or four wheels of this type are commercially available; they offer a greater stability compared to two-wheeled vehicles simply because they have more wheels in contact with the ground, and therefore are less prone to slip.

Vehicles of this type need to be driven just like a motorcycle, and it is therefore difficult to realize them with a good protection from the weather.

A second control system of the tilt uses active force actuators directly controlling the angle of the tilt. Such systems are difficult and expensive to realize and require many redundant systems because, in the event of failure of one of the sensors, actuators or power supplies, the system still has to be safe.

A third control system provides that the angle of the tilt is controlled both through the steering wheel and the force applied by the driver with his/her legs. Such a system offers great stability without the use of power actuators. Examples of such system are disclosed in U.S. patents Nos. US7669864 and US7665749. The stabilization of such vehicles by the power of the driver's legs only can become very difficult when the centre of gravity of the vehicle is quite high or the vehicle is narrow. Moreover, the application of a roof on such a vehicle would raise the centre of gravity, while the increase in width would nullify the advantage of having a narrow, and therefore agile, vehicle.

The document FR 2 943 308 A1 discloses essentially the preamble of claim 1.

**SUMMARY OF THE INVENTION**

The aim of the present invention is to realize a laterally tiltable vehicle structure with a new and improved mechanism by which the driver will be able to control the angle of the tilt with his/her legs.

According to this aim, an object of the invention is to provide a vehicle structure which, even at standstill or in reverse direction, is not difficult to drive even if the centre of gravity is high and the vehicle is relatively narrow.

Another object of the invention is to realize a vehicle structure, which is statically stable and does not need a locking means of the tilt when the vehicle is parked.

A further object of the present invention is to provide a structure, which, thanks to its particular constructive characteristics, is able to ensure the best reliability and safety in use.

This and other objects, which will become more apparent hereinafter, are achieved by a laterally tiltable vehicle structure according to claim 1.

Further peculiarities of the vehicle structure of the invention are defined by the dependent claims.

**BRIEF DESCRIPTION OF THE DRAWINGS**

Further characteristics and advantages of the present invention will become more apparent from an examination of the description of a preferred but not exclusive embodiment of the invention, illustrated for indicative and not limitative purposes in the accompanying drawings, in which:

Figure 1 is a schematic perspective view of a vehicle structure of the present invention.
Figure 2 is an elevational side view of the vehicle structure;
Figure 3 is an elevational front view of the vehicle shown in tilted position;
Figure 4 is a partial perspective view of the vehicle shown in tilted position;
Figure 5 schematically represents a balancing situation of the vehicle;
Figure 6 represents the trend of the forces on the eccentric pinion;

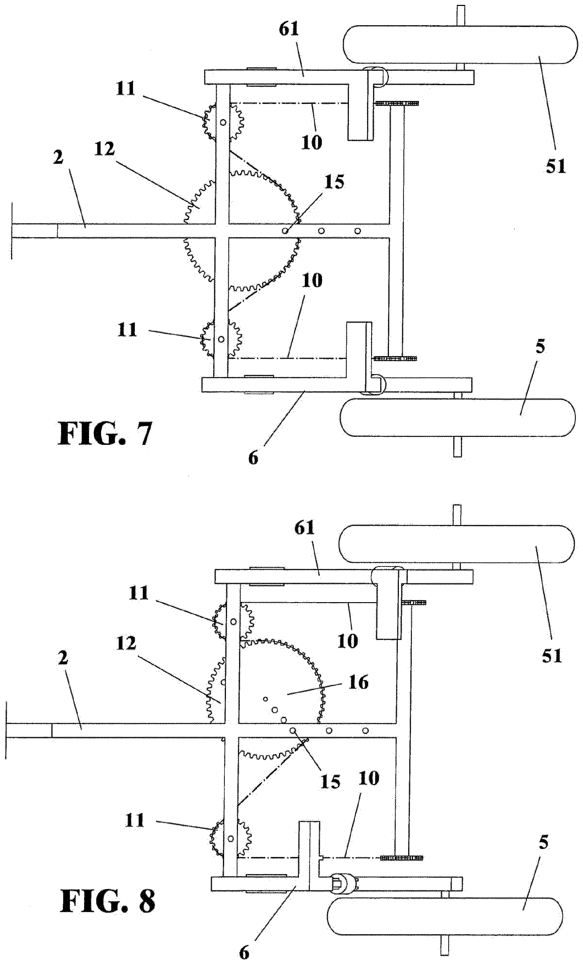

Figure 7 is a schematic plan view of the vehicle shown in non-tilted position;
Figure 8 is a schematic plan view of the vehicle shown in tilted position;
Figure 9 is a perspective view of a portion of the chain;
Figure 10 shows the ball screw actuator applied to the central gear;
Figure 11 is a perspective view of a tilting vehicle structure according to a further aspect of the invention;

Figure 12 is a schematic representation of the vehicle of the preceding figure in a tilted position;
Figure 13 is a perspective view of the vehicle of the preceding figure;
Figure 14 is another perspective view of the vehicle of the preceding figure;
Figure 15 is a perspective view showing an adjustment system of the spring-loaded slider;
Figure 16 is a schematic front view of the vehicle of Figure 11;
Figure 17 represents the dynamic situation of a tilting vehicle;
Figure 18 represents the static situation of a tilting vehicle.

## DESCRIPTION OF THE PREFERRED EMBODIMENTS

With particular reference to the numerical symbols of the above figures, the laterally tilting vehicle structure, according to the invention, generally indicated by the reference number 1, comprises a frame 2 having a rear wheel 3 attached to the frame 2 through a fork 4 in central position and adjustable in order to constitute a steering system, similarly to a front fork of a motorcycle.

According to the present invention, the structure 1 comprises two front wheels, indicated by the reference numbers 5 and 51, each one of which is connected to the frame 2 by means of a respective swing arm 6 and 61.

Each swing arm 6, 61 is pivoted to the frame 2 and is movable in contrast with a respective damper 7, 71.

The swing arms 6, 61 are pivoted to a horizontal axis pin 8 which is perpendicular to the longitudinal horizontal axis 9 of the frame 2.

The pivot angle of the swing arm 6, 61 is limited and has the effect of increasing or decreasing the height of the corresponding wheel.

The two swing arms are connected to each other and to the frame 2, through a flexible element such as a chain 10 connected to the opposite end of the pivot point with a dampening mechanism.

The chain 10 passes through a system of pulleys, indicated by the reference numbers 11 and 12 and mounted on the frame 2, which pulleys retain the swing arms in relation to each other, so that when a swing arm pivots upwards, the opposite swing arm pivots downwards.

The chain 10 is held in tension by the weight of the vehicle. However, the swing arms are advantageously spring loaded in case the vehicle loses contact with the ground.

At the opposite end with respect to the pivot point to the frame 2, each swing arm 6, 61 has a pedal 13, operable by the driver who, by pressing the pedal, causes the swing arm to pivot downwards.

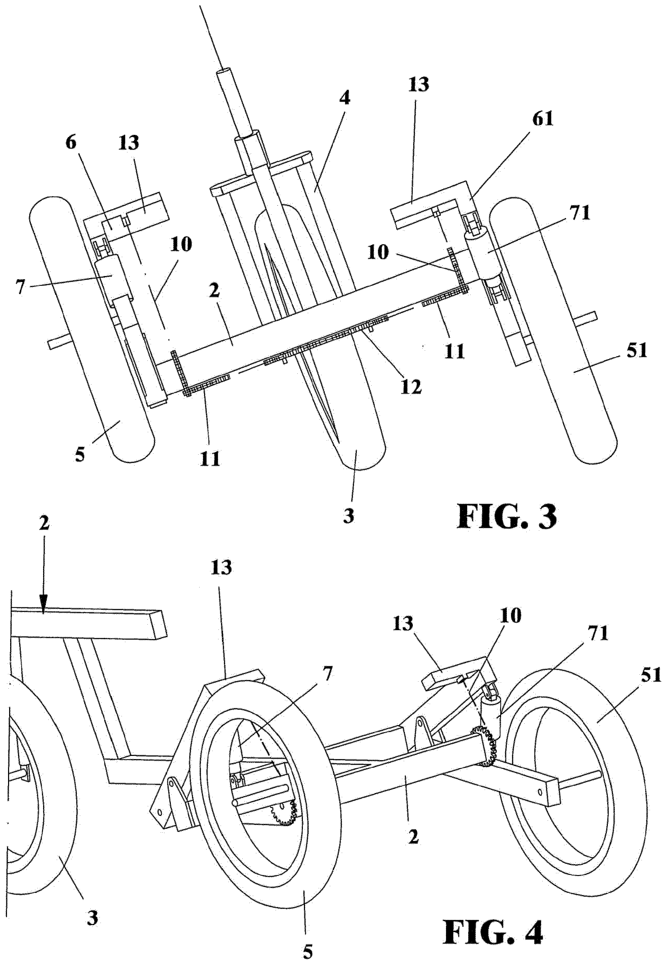

As clearly visible in figure 3, the lateral tilt of the vehicle is obtained from the movement of the front wheels: when a wheel moves upwards, the other wheel will move downwards.

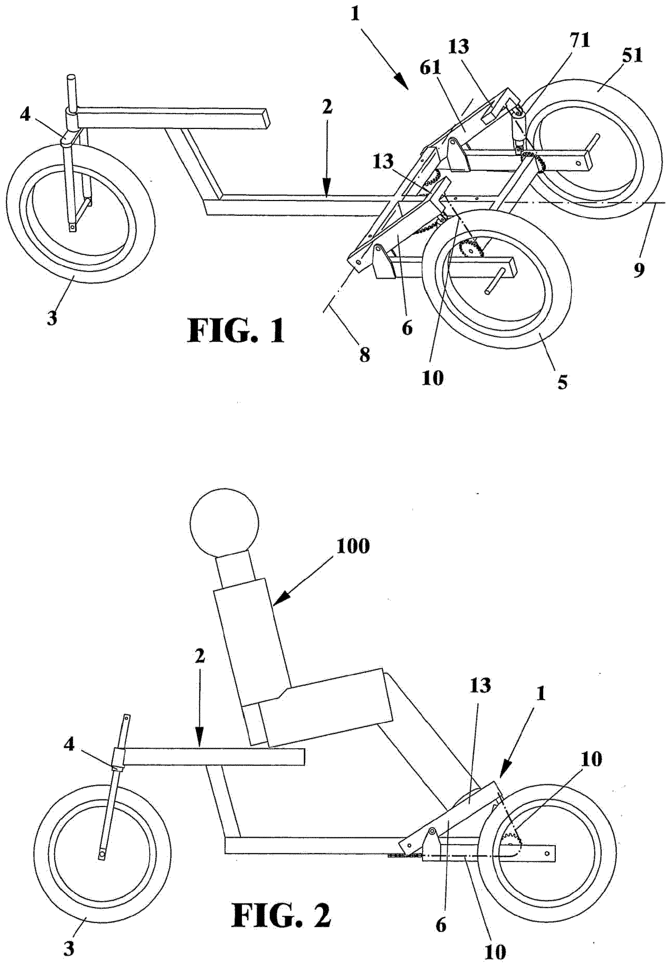

According to the present invention, the mutual movement of the wheels is set by the chain 10 while the actuator that tilts the vehicle is constituted by the legs of the driver, indicated by the reference number 100 in Figure 2.

When the driver 100 presses a pedal 13, he/she causes the corresponding swing arm to pivot with respect to the pivot pin, thus increasing the height of that wheel. The movement of the swing arm causes the movement of the chain 10 driving the opposite wheel to move in the opposite direction.

The central pulley 12 is mounted on the frame 2 so as to turn about a pin 15 which is offset from the centre 16 of the central pulley 12 itself.

When the vehicle is tilting, this forces the chain to pass around a longer path, thus increasing the height of the vehicle.

Therefore, the upward movement of a wheel is lower than the downward movement of the opposite wheel.

If the eccentricity of the central gearwheel 12 is calculated correctly, the tilting torque of the vehicle will be opposed by the torque produced by the force tending to lift the vehicle, therefore the vehicle cannot fall even when it is tilted from standstill.

Alternatively, the central gear 12 can be oval or have another suitable shape according to the desired stabilizing force.

According to another aspect of the invention, the vehicle is stabilized also statically.

In this way, the structure according to the present invention allows the vehicle to remain stable even when tilted, so that the force required from the driver is minimal, even when the vector sum of the force of gravity and the acceleration force towards the centre does not pass through the pivot point.

In fact, according to the present invention, there is no need to have a locking system of the tilt when the vehicle is parked.

The present structure also allows to change the height or distance of the vehicle from the ground.

If the vehicle is stationary, the wheel 5 towards which the vehicle is tilted, namely the left side in Figure 3, must support a greater weight than the wheel 51 on the right side, because the centre of gravity of the vehicle is closer to the left side.

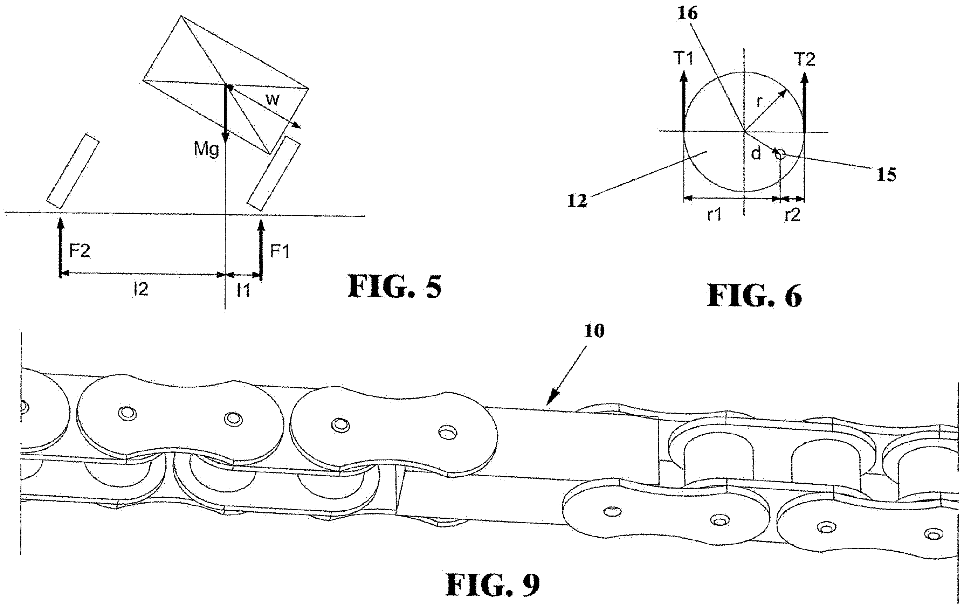

As shown in the scheme of Figure 5, in order that the vehicle is balanced

$$F1 * l1 = F2 * l2.$$

In the case of the vehicle disclosed above, this means that the portion of the chain 10 on the side towards which the vehicle is tilted has a higher tension than that on the opposite side (Figure 6).

To obtain such a situation without active components, the central pulley 12 is mounted around an eccentric point 15, so that it is allowed to turn about a point which is not its centre 16, causing the continuous variation of the lever as the vehicle tilts.

In order that the central pulley is stopped, it is necessary to have the following: T2 * r2 = T1 * r1.

Geometrically, this means that if

$$F2 / F1 = T2 / T1 => w * d * sin\emptyset = h * r * sin\theta$$

Where $\theta$ is the angle of the tilt and $\emptyset$ is the rotation angle of the central pulley 12.

The geometry of the system can be chosen so that $\theta = \emptyset$, thereby with a correct d the vehicle is stable with any angle. If Tf d is too large, the vehicle tends to prefer the upright position, and if d is too small, the vehicle would increase the tilting torque when bending.

Interesting behaviours can be obtained even with $\theta < \emptyset$, and vice versa.

Note that if the central pulley 12 were not mounted eccentrically, but were to turn about its central point 16, it would be useless because the upward movement of a wheel would be equal to the downward movement of the opposite wheel and the vehicle would be subject to the same tilting torque as a bicycle and would fall if left free.

Furthermore, it is interesting to note that, in the tilted position, the wheels touch the ground at a greater distance between each other and this means that, to tilt the vehicle, there must be a sliding movement of the wheel relative to the ground. This sliding slightly opposes to the tilt.

Instead of the system with chain and gearwheels shown in this embodiment, it is possible to use a system with cable and pulleys, which would have the advantage of being simpler, but it would be more subject to slippage.

If a chain 10 is used, it is appropriate to vary the direction of the same between the end and the central sectors, as shown in Figure 9, because the gearwheels 11 and the central gearwheel 12 do not lie on the same plane.

The eccentricity of the central gearwheel 12 is desirable at low speed, but it is not when driving in a bend at higher speeds.

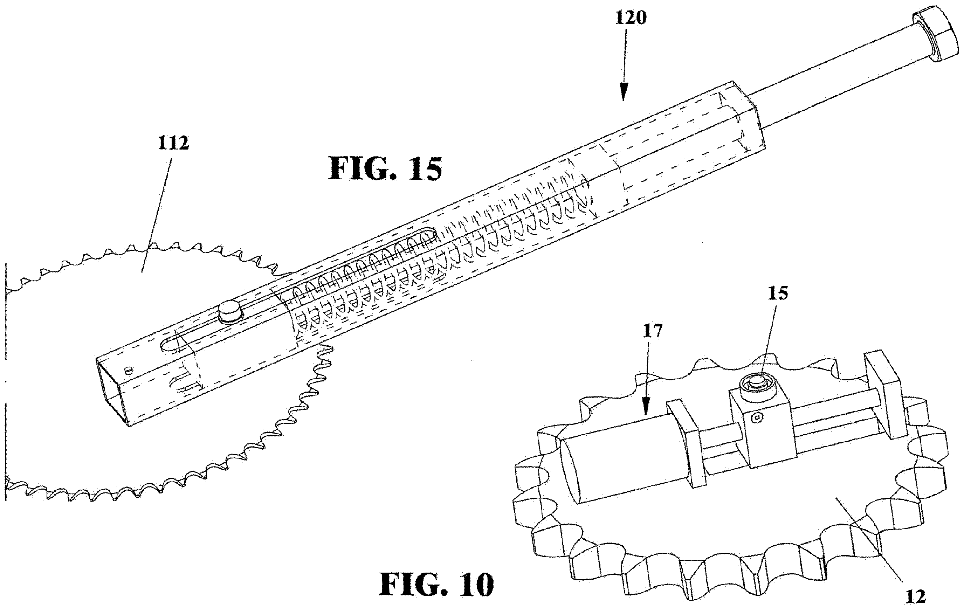

For this purpose, the central gear 12 can be equipped with a ball screw actuator, indicated by the reference number 17 in Figure 10, which allows to move the pivot point 15 of the gearwheel.

The ball screw actuator allows to move the pin 15 along the diameter of the central gear 12.

The actuator 17 can be programmed to gradually reduce the eccentricity as the speed increases and vice versa.

In case of failure of the motor or the electronics or power failure, the driver will still be able to control the vehicle with his/her legs, and he/she will only have to exert a greater effort if the actuator is in the wrong position.

Furthermore, the actuator automatically moves to the eccentric position due to the weight of the vehicle and to the tension of the chain 10.

This means that, in case of failure, the vehicle tends to a vertical position if no force is exerted on the pedals.

In this mechanism, the weight of the vehicle rests on the chain, automatically applying the necessary force; if the weight increases, the tilting torque increases and so does the tension of the chain.

According to a further aspect of the invention, it is possible to vary the position of the central gear 12 with respect to the frame 2, manually or through a motorized system.

In this way, the position of the pin 15 of the central gearwheel 12 can also be modified with respect to the frame 2.

This has the effect of varying the height of the front of the vehicle, such as in driving off-road or on the snow. The more the central gear 12 is advanced, the more the vehicle will be raised and vice versa.

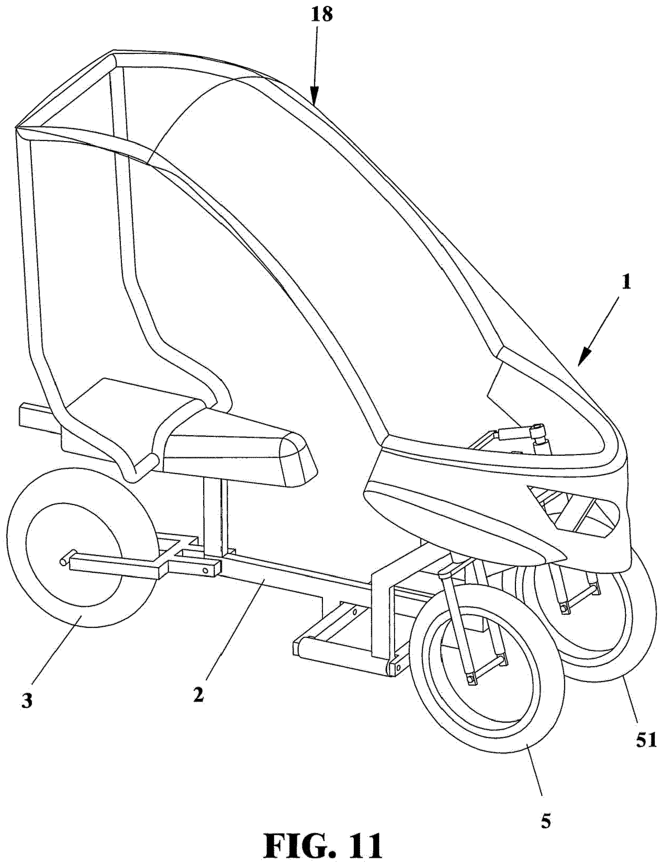

According to a further aspect of the present invention, the vehicle may be equipped with a parallelogram mechanism, schematically shown in Figure 11.

The vehicle structure with a parallelogram mechanism includes a roof 18 fixed to the frame 2, thus tilting with the vehicle body, therefore it has a relatively high centre of gravity.

The driver stabilizes the vehicle by the steering system and by applying pressure with his/her legs on the footrest platform, but at low speed the necessary force to be applied by the driver's legs can be high, especially if the centre of gravity is high and the vehicle is not very wide.

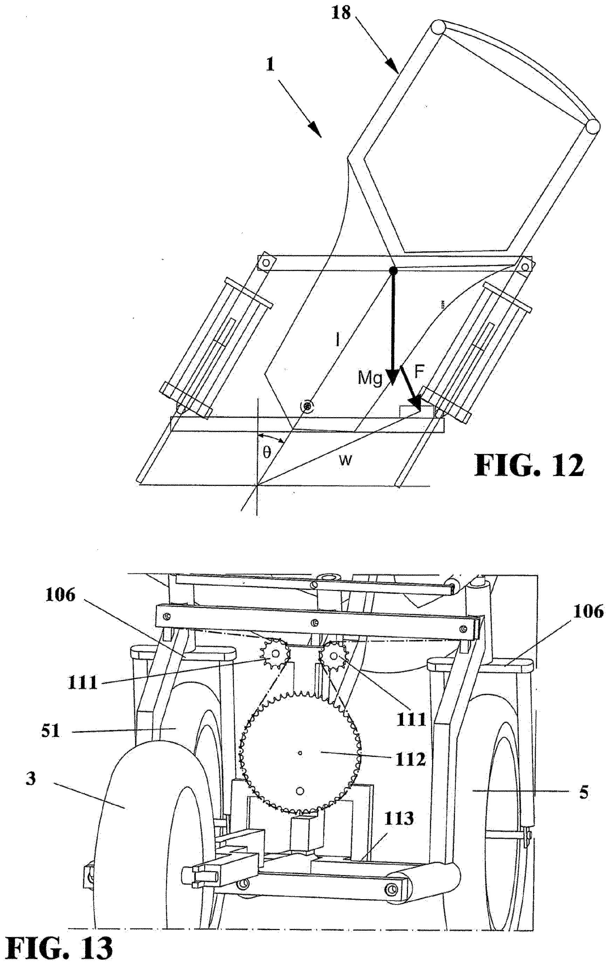

Figure 12 is a schematic representation of the tilted vehicle. The force applied by the driver can be represented as a force between the footrest and the seat or the handlebar of the vehicle, and must create a torque to balance the torque created by the movement of the mass from the equilibrium point:

$$Mg * l * \sin\theta = F * w$$

where F is the component of the force applied by the driver perpendicular to the length w joining the pivot point to the footrest.

In case springs are mounted to oppose the tilting force, in order to supply the force F, the vehicle can be balanced at a tilted angle, but would have a preferred angular position. The force applied by the springs would be excessive or insufficient when the angle is not the preferred angle.

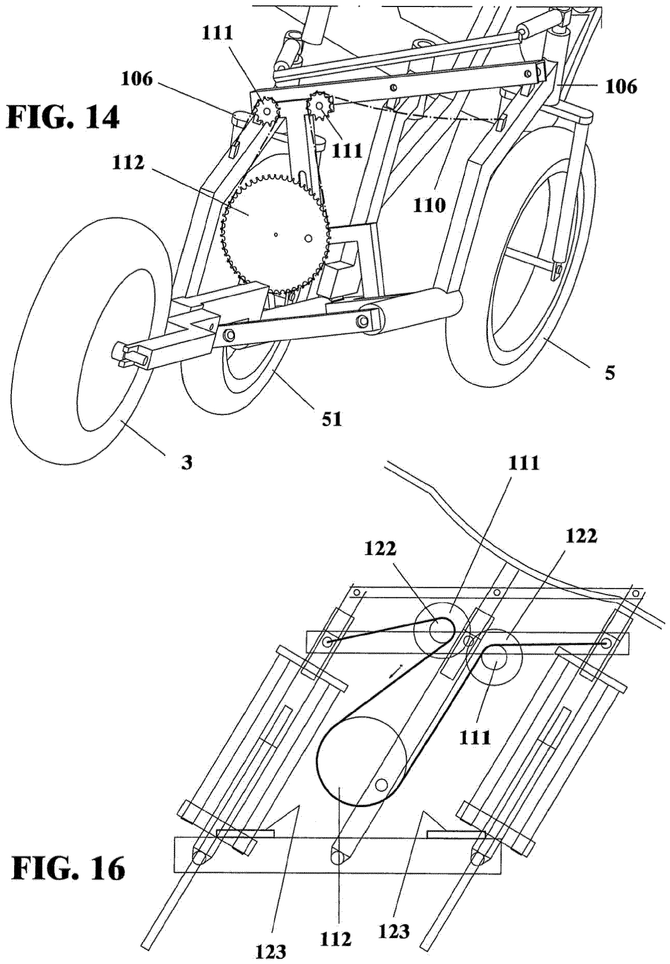

According to the present invention, an eccentric pinion 112 is provided, as shown in Figure 16, which increases the balance force when the vehicle tilts, in order to keep it stable.

As shown in Figures 13 and 14, a system with gearwheels 111 and 112 is mounted on the platform 113.

A chain 110, passing through the system with gearwheels 111, 112, connects two side frames 106.

The central pinion 112, which is larger, is mounted eccentrically on a spring-loaded slider 120 allowing the upward and downward movement. In order to move upwards, it must compress the spring.

The geometry is such that the spring is compressed as the vehicle tilts, thus increasing the tension of the chain.

As in the previous example, the portion of chain located on the side of the tilted vehicle has a higher tension, because of the eccentric pinion. Therefore, there will be a torque tending to oppose to the tilt of the vehicle. This torque increases according to the angle of the tilt and the tension on the spring.

Unlike the preceding example, the tension of the chain has no relation to the weight of the vehicle, since it only depends on the force of the spring, and the force of the spring is adjusted according to the payload of the vehicle.

Figure 15 shows an example of embodiment of a spring-loaded slider 120 adjusting system which allows to adjust the compression of the spring and thus to vary the tension of the chain. The spring-loaded slider 120 can advantageously be motorized and programmed so as to increase the tension of the spring at lower speeds.

A servomotor 122 can be mounted on one or both pinions 111, so as to help the driver to keep the balance of the vehicle.

The action of the servomotor 122 amplifies the force that the driver is operating with his/her leg, which force is measured by pressure sensors 123.

The difference between the pressure in the two pedals determines the direction and the torque that the servomotor must apply. The same applies to the example of embodiment disclosed above.

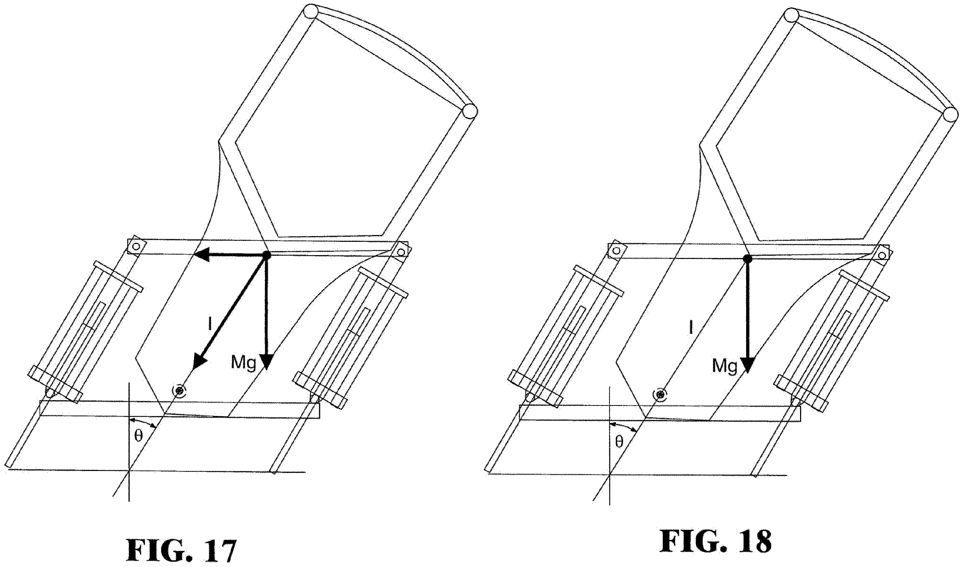

As shown in Figure 17, the vector sum of the force of gravity and the acceleration force towards the centre passes through the pivot point, the vehicle is critically stable, and the driver does not have to apply any force with his/her legs; but when the vehicle is unbalanced, the torque tending to make the vehicle fall increases with the angle of divergence. This torque must be opposed by the force that the driver has to apply.

In Figure 18, this effect is illustrated in a standstill condition; the tilting torque $T_t = Mg\,l\,\sin\theta$, where M is the total mass of the vehicle (plus the content) and l is the height of the centre of gravity and $\theta$ is the angle of tilt. It is clear that the force required from the driver to counteract this torque increases as the weight, the angle and the height of the centre of gravity increase. The more unbalanced is the vehicle, the greater will be the force required to stabilize it. It is easy to imagine that the force required to the driver can become excessive and cause the fall of the vehicle during the manoeuvre at low speed or in reverse direction, when it is not possible to stabilize the vehicle through the steering system.

Generally, and again referring to Figures 17 and 18, a tilting vehicle moves its centre of gravity when tilting in the bends, so that the vector sum of the force of gravity and the acceleration towards the centre passes through the median point equidistant from the laterally displaced wheels, as shown in Figure 17. In this case the force applied by the laterally displaced wheels must be the same.

On the other hand, when the vehicle is stationary and tilted, as shown in Figure 18, the force applied by the wheel on the tilted side of the vehicle must be greater than the force applied by the wheel on the opposite side.

According to the present invention, the proposed mechanism allows to tilt the vehicle in a standstill condition, without causing it to fall or tend to the vertical position, while ensuring the stability of the vehicle even when stationary.

According to the present invention, the angle of the tilt is not blocked and the vehicle remains balanced with any angle as long as the centre of gravity is positioned within the base triangle defined by the wheels. No active actuators are used.

It has been found in practice that the invention achieves the intended aim and objects.

In fact, it has been realized a laterally tiltable vehicle structure with a new and improved mechanism by which the driver will be able to control the angle of the tilt by his/her legs.

The vehicle is stable even in a standstill condition or in reverse direction, and it is easy to drive even if the centre of gravity is high and the vehicle is relatively narrow.

Obviously, the employed materials, as well as the dimensions, may be any according to requirements.

**Claims**

1. A laterally tiltable vehicle structure (1) comprising at least two front wheels (5, 51) each of which is associated to a swing arm (6, 61) pivoted to a frame member (2) so as to be able to pivot and change the height of the respective wheel (5, 51); said swing arms (6, 61) being interconnected by a drive system so that when a swing arm is lifted the opposite one is lowered and vice versa, **characterized in that** said drive system comprises a chain (10) connecting said swing arms (6, 61) passing through a central gear (12) adapted to turn about a pin (15); said pin (15) not coinciding with the centre of said central gear (12); an eccentric rotation of said central gear (12) causing the force on the tilted side of the vehicle (1) to increase proportionally with the angle of the tilt.

2. A structure, according to claim 1, **characterized in that** each swing arm includes a damper element.

3. A structure, according to claim 1, **characterized in that** each swing arm includes a pedal actuated by a driver's foot which directly controls the angle of the tilt.

4. A structure, according to claim 1, **characterized in that** the eccentricity of said central gear is controlled by a motorized system adapted to reduce said eccentricity as the vehicle speed increases.

5. A structure, according to claim 1, **characterized in that** said central gear (12) is slidably mounted on said frame (2) to vary the position of said pin (15) with respect to said frame (2) so as to vary the height of the wheels, thus varying the distance of the vehicle (1) from the ground.

6. A structure, according to claim 1, **characterized in that** said structure includes a parallelogram mechanism comprising an eccentric pinion which increases the balancing force as the vehicle tilts in order to keep it stable; said eccentric pinion being part of a gearwheel system mounted on a platform; a chain, passing through the gearwheel system, connects two side frames; said central pinion is eccentrically mounted on a spring-loaded slider which allows said central pinion to move upwards and downwards; said spring is compressed as the vehicle tilts, thus increasing the tension of the chain; the tension of the portion of chain located on the tilted side of the vehicle is higher, because the pinion is eccentric, therefore there will be a torque tending to oppose to the tilt of the vehicle, such torque increasing as the angle of the tilt and the tension on the spring increase; the tension of the chain has no relation to the weight of the vehicle, since it only depends on the force of the spring, and the force of the spring is adjusted according to the payload of the vehicle.

7. A structure, according to claim 6, **characterized in that** said spring-loaded slider is motorized and programmed so as to increase the tension of the spring at lower speeds.

8. A structure, according to claim 6, **characterized in that** said structure includes a servomotor mounted on one or both pinions so as to help the driver to keep the balance of the vehicle; the action of the servomotor amplifying the force that the driver is operating with his/her leg, said force being measured by pressure sensors.

9. A structure, according to claims 7 and 8, **characterized in that** one or more of the gearwheels can be motorized to help the driver to keep the vehicle stable, by means of accelerometers measuring the forces to which the vehicle is subjected or pressure sensors in the pedals determining the amount of torque the driver wants to exert.

**FIG. 1**

**FIG. 2**

FIG. 3

FIG. 4

**FIG. 6**

**FIG. 5**

**FIG. 9**

FIG. 7

FIG. 8

FIG. 15

FIG. 10

18

1

3

2

51

5

# FIG. 11

**FIG. 12**

**FIG. 13**

FIG. 14

FIG. 16

**FIG. 18**

**FIG. 17**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | FR 2 943 308 A1 (AIRBUS [FR]) 24 September 2010 (2010-09-24) * page 10, line 15 - page 20, line 33; figures 1-9 * | 1-9 | INV. B62K5/10 B62D9/02 |
| A | WO 2014/006573 A1 (SASP INNOVATION SRL [IT]) 9 January 2014 (2014-01-09) * pages 4-11; figures 1-17 * | 1-9 | |
| A | WO 2012/007819 A1 (PIAGGIO & C SPA [IT]; BARTOLOZZI STEFANO [IT]; BERNARDI LUCA [IT]; PRO) 19 January 2012 (2012-01-19) * page 7, line 30 - page 21, line 19; figures 1-15 * | 1-9 | |

TECHNICAL FIELDS
SEARCHED    (IPC)

B62K
B62D

The present search report has been drawn up for all claims

| Place of search | Date of completion of the search | Examiner |
|---|---|---|
| Munich | 6 April 2017 | Flori, Massimiliano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 02 0451

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2017

| Patent document cited in search report | | Publication date | Patent family member(s) | | Publication date |
|---|---|---|---|---|---|
| FR 2943308 | A1 | 24-09-2010 | NONE | | |
| WO 2014006573 | A1 | 09-01-2014 | EP | 2870060 A1 | 13-05-2015 |
| | | | WO | 2014006573 A1 | 09-01-2014 |
| WO 2012007819 | A1 | 19-01-2012 | AR | 082228 A1 | 21-11-2012 |
| | | | CN | 103153769 A | 12-06-2013 |
| | | | EP | 2593352 A1 | 22-05-2013 |
| | | | EP | 2977304 A1 | 27-01-2016 |
| | | | EP | 2977305 A1 | 27-01-2016 |
| | | | EP | 2977306 A1 | 27-01-2016 |
| | | | EP | 2977307 A1 | 27-01-2016 |
| | | | ES | 2553744 T3 | 11-12-2015 |
| | | | IT | 1401130 B1 | 12-07-2013 |
| | | | TW | 201210882 A | 16-03-2012 |
| | | | US | 2013168944 A1 | 04-07-2013 |
| | | | US | 2014353940 A1 | 04-12-2014 |
| | | | WO | 2012007819 A1 | 19-01-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7669864 B
- US 7665749 B

- FR 2943308 A1